# EUROPÄISCHE PATENTANMELDUNG

(11) **EP 2 123 921 A1**
(43) Veröffentlichungstag der Anmeldung: **25.11.2009**
(21) Anmeldenummer: 09158420.1
(22) Anmeldetag: 22.04.2009
(51) Int. Cl.: F16B 13/14, E21D 20/02

(54) **Setzverfahren zum Verankern eines Befestigungselementes**

(30) Priorität: 21.05.2008 DE 102008001904
(71) Anmelder: HILTI Aktiengesellschaft, 9494 Schaan (LI)
(72) Erfinder: Ginter, Herbert, DE-87656 Germanigen (DE); Skupien, Roman, DE-86830 Schwabmünchen (DE)

(57) **Zusammenfassung**

Ein Setzverfahren zum Verankern eines Befestigungselementes (11) mit einem Mischabschnitt (13) in einem Untergrund (21) mittels einer aushärtbaren, mehrkomponentigen Masse (31) umfasst die Schritte:
- Bohren eines Bohrlochs (22) in den Untergrund (21) mit einem Bohrer (36), wobei die erstellte Bohrlochtiefe (T) zumindest 5% grösser als die erforderliche Verankerungslänge (L) des Befestigungselementes (11) ist;
- Einbringen der aushärtbaren, mehrkomponentigen Masse (31) in das ungereinigte Bohrloch (22);
- Einführen des Befestigungselementes (11) mit dem Mischabschnitt (13) voran in das Bohrloch (22); und
- maschinelles Eindrehen des Befestigungselementes (11) in das befüllte Bohrloch (22) mit einer Drehantriebseinrichtung unter Vermischung der aushärtbaren, mehrkomponentigen Masse (31) und des im Bohrloch befindlichen Bohrmehls (23) bis zum Erreichen der erforderlichen Verankerungslänge (L) des Befestigungselementes (11).

## Beschreibung

Die Erfindung betrifft ein Setzverfahren zum Verankern eines Befestigungselementes mit einem Aussendurchmesser und mit einem Mischabschnitt in einem Untergrund mittels einer aushärtbaren, mehrkomponentigen Masse.

Zur chemischen Verankerung eines Befestigungselementes, wie einer Ankerstange, einer Gewindestange, einer Gewindehülse, einem Schraubanker oder einem Bewehrungseisen, in einem Untergrund, wie ein Bauteil oder Werkstück, wird ein Bohrloch erstellt, dieses gereinigt und mit einer aushärtbaren, mehrkomponentigen Masse, z. B. einer zweikomponentigen Mörtelmasse, befüllt. Dann wird das Befestigungselement in das befüllte Bohrloch gesetzt. Nach dem Aushärten der Masse weist das Befestigungselement hohe Lastwerte auf. Derartige Befestigungselemente sind, gegenüber mechanisch verankerten Befestigungselementen, ohne Spreizkräfte im Untergrund verankert, so dass kleine Rand- und Achsabstände der verankerten Befestigungselemente im Untergrund möglich sind. Am freien Ende des im Untergrund verankerten Befestigungselementes werden Anbauteile beispielsweise über Muttern am Untergrund festgelegt.

Aus der EP 0 150 555 A1 ist ein Setzverfahren bekannt, bei dem zuerst ein Bohrloch erstellt, die aushärtbare, mehrkomponentige Masse in einer Patrone verpackt in das Bohrloch eingebracht und anschliessend das mit einer Mischschneide als Mischabschnitt versehene Befestigungselement mittels einer Drehantriebseinrichtung unter Zerstörung der zuvor eingebrachten Patrone und bei gleichzeitigem Durchmischen der Komponenten der aushärtbaren, mehrkomponentigen Masse eingedreht wird.

Aus der DE 10 2005 042 481 A1 ist ein Setzverfahren bekannt, bei dem nach dem Bohren des Bohrlochs dieses mit einer aushärtbaren, mehrkomponentigen Masse befüllt und anschliessend eine Ankerstange von Hand unter leichtem Drehen eingesetzt wird. Eine vollständige Durchmischung der Komponenten der aushärtbaren, mehrkomponentigen Masse ist mit diesem Setzverfahren nicht gegeben.

Wie z. B. in der DE 34 42 383 A1 dargelegt ist, wurde es bis anhin in der Fachwelt als wesentlich angesehen, vor dem Einbringen der aushärtbaren, mehrkomponentigen Masse das Bohrloch zu reinigen, was einen erheblichen Aufwand, insbesondere bei Serienanwendungen, zur Erstellung der Verankerungen bedingt.

Aufgabe der Erfindung ist es, ein Setzverfahren zum Verankern eines Befestigungselementes in einem Untergrund mittels einer aushärtbaren, mehrkomponentigen Masse zu schaffen, das keine vorgängige Reinigung des Bohrlochs erfordert.

Die Aufgabe ist durch die Merkmale der unabhängigen Ansprüche gelöst. Vorteilhafte Weiterbildungen sind in den Unteransprüchen dargelegt.

Gemäss der Erfindung umfasst das Setzverfahren zum Verankern eines Befestigungselementes mit einem Aussendurchmesser und mit einem Mischabschnitt in einem Untergrund mittels einer aushärtbaren, mehrkomponentigen Masse die Schritte:
- Bohren eines Bohrlochs in den Untergrund mit einem Bohrer, wobei die erstellte Bohrlochtiefe zumindest 5% grösser als die erforderliche Verankerungslänge des Befestigungselementes ist;
- Einbringen der aushärtbaren, mehrkomponentigen Masse in das ungereinigte Bohrloch mit einem Auspressgerät;
- Einführen des Befestigungselementes mit dem Mischabschnitt voran in das Bohrloch; und
- maschinelles Eindrehen des Befestigungselementes in das befüllte Bohrloch mit einer Drehantriebseinrichtung unter Vermischung der aushärtbaren, mehrkomponentigen Masse und des im Bohrloch befindlichen Bohrmehls bis zum Erreichen der erforderlichen Verankerungslänge des Befestigungselementes.

Durch das im Vergleich zur erforderlichen Verankerungslänge des Befestigungselementes tiefere Bohrloch wird am Bohrlochgrund ein Aufnahmeraum in einem nicht lastbeeinflussenden Bereich im Untergrund zur Aufnahme eines Teils des im Bohrloch verbliebenen Bohrmehls beziehungsweise Bohrkleins geschaffen. Je nach Bohrrichtung und Bohrlochgrösse verbleiben 5 Gew.-% bis 25 Gew.-%, bezogen auf die gesamte Masse des aus dem Bohrloch zu entfernenden Materials, im Bohrloch. Um die Menge der im Bohrloch verbleibenden Menge des Bohrmehls beziehungsweise Bohrkleins zu reduzieren, kann der Bohrer während dem Bohrvorgang aus dem Bohrloch gezogen und anschliessend wieder bis zum Erreichen der zu erstellenden Bohrlochtiefe in das Bohrloch eingeführt werden, wobei sich z. B. das in den Förderwendeln des Bohrers befindliche Bohrmehl beziehungsweise Bohrklein aus dem Bohrloch ohne zusätzlichen Aufwand entfernen lässt. Unter einem ungereinigten Bohrloch wird ein Bohrloch verstanden, aus dem nicht mittels separaten Vorrichtungen, wie Bürsten oder Ausblaseinrichtungen, sich noch im Bohrloch befindliches Bohrmehl beziehungsweise Bohrklein entfernt wurde.

Beim Einbringen der, vorteilhaft pastösen, aushärtbaren, mehrkomponentigen Masse in das ungereinigte Bohrloch ist vorteilhafterweise darauf zu achten, dass die Verfüllung vom Bohrlochtiefsten her und blasenfrei erfolgt. Die einzubringende Menge der aushärtbaren Masse ist von dem zwischen dem Bohrloch und dem Befestigungselement verbleibenden Volumen abhängig. Beispielsweise wird das Bohrloch zur Hälfte oder zu zwei Dritteln mit der aushärtbaren, mehrkomponentigen Masse verfüllt. Eine allfällig überschüssige Menge der aushärtbaren Masse tritt beim Setzen des Befestigungselementes aus dem Bohrloch aus.

Durch das maschinelle Eindrehen des mit dem Mischabschnitt versehenen Befestigungselementes, welches beispielsweise direkt in einer Werkzeugaufnahme der Drehantriebseinrichtung, wie z. B. eines Bohrhammers oder eines Schraubers, angeordnet ist, werden die Komponenten der eingebrachten aushärtbaren Masse durchmischt und gleichzeitig ein Teil des im Bohrloch befindlichen Bohrmehls beziehungsweise Bohrkleins in die aushärtbare Masse untergemischt. Nach dem Erreichen der erforderlichen Verankerungstiefe wird die Drehantriebseinrichtung von dem Befestigungselement entkuppelt. Nach Ablauf der temperaturabhängigen Aushärtezeit der aushärtbaren Masse ist am freien, aus dem Untergrund herausragenden Ende des Befestigungselementes ein Anbauteil befestigbar.

Das erfindungsgemässe Setzverfahren zeichnet sich durch den schnelleren Ablauf sowie einer deutlich geringeren Staubbelastung aus. Des Weiteren sind weniger Geräte beziehungsweise Werkzeuge zum Erstellen der Verankerungen erforderlich, da auf die Bohrlochreinigung vor dem Einbringen der aushärtbaren, mehrkomponentigen Masse verzichtet werden kann.

Vorzugsweise wird ein Bohrer verwendet, dessen Nenndurchmesser dem 1.05- bis 1.5-fachen des Aussendurchmessers des Befestigungselementes entspricht, damit wird ein ausreichender Ringspalt zwischen dem Bohrloch und dem Befestigungselement für die beim Eindrehen des Befestigungselementes verdrängte Menge der aushärtbaren, mehrkomponentigen Masse gewährleistet, womit eine vollständige Umhüllung des gesetzten Befestigungselementes über die gesamte erforderliche Verankerungslänge sichergestellt ist.

Bevorzugt ist die erstellte Bohrlochtiefe maximal 15 % grösser als die erforderliche Verankerungslänge des Befestigungselementes, womit ein ausreichend grosser Aufnahmeraum am Bohrlochgrund für das im Bohrloch verbleibende Bohrmehl beziehungsweise Bohrklein vorhanden, aber der Aufwand zur Erstellung des Bohrlochs auch in harten Untergründen nicht übermässig gross ist.

Vorzugsweise werden die Komponenten der aushärtbaren, mehrkomponentigen Masse unvermischt in das Bohrloch eingebracht, womit auf eine dem Bohrloch vorgeschaltete Mischeinrichtung an der Auspressvorrichtung verzichtet werden kann. Ein Injektionsrohr zur Zuführung der Komponenten aus dem Auspressgerät in das Bohrloch ist somit ausreichend. Durch den Wegfall der Mischeinrichtung wird zudem der erforderliche Kraftaufwand zum Ausbringen der Komponenten mittels des Auspressgerätes massgeblich reduziert. Die Komponenten werden axial parallel zueinander, in einer side-by-side-Anordnung durch das Injektionsrohr hindurch in das Bohrloch eingebracht. Da die Komponenten nur in einem begrenzten Bereich miteinander reagieren, erhöht sich die zur Verfügung stehende Verarbeitungszeit, in welcher das Befestigungselement in das Bohrloch eingebracht werden muss, gegenüber einer bereits beim Einbringen in das Bohrloch vermischten aushärtbaren Masse massgeblich, was besonders bei Serienanwendungen, in denen mehrere Befestigungselemente gesetzt werden müssen, vorteilhaft ist. Zudem findet keine oder nur eine beschränkte Aushärtung der Komponenten im Injektionsrohr statt, was die Mörtelverluste und die Menge des anfallenden Abfalls reduziert. Weiter ist ein Injektionsrohr ohne Statikmischer wesentlich günstiger herstellbar als ein solches mit einem Statikmischer, womit sich die Kosten für die Herstellung der Verankerung massgeblich senken lassen. Des Weiteren ermöglicht die Entkopplung von Verarbeitungszeit und Aushärtezeit der aushärtbaren, mehrkomponentigen Masse die Verwendung von schneller aushärtenden Massen.

Bevorzugt wird eine definierte Menge eines Füllstoffs mit einer definierten Partikelgrössenverteilung nach dem Einbringen der aushärtbaren, mehrkomponentigen Masse und vor dem maschinellen Eindrehen des Befestigungselementes in das Bohrloch eingebracht, wobei der Füllstoff den Mischvorgang der Komponenten der aushärtbaren Masse sowie die Untermischung des noch im Bohrloch vorhandenen Bohrmehls beziehungsweise Bohrkleins in die aushärtbare Masse zusätzlich unterstützt. Zusätzlich erfolgt beim maschinellen Eindrehen des Befestigungselementes eine Profilierung des Bohrlochs durch den Füllstoff, wobei Hinterschnittbereiche geschaffen werden, welche eine vorteilhafte Verbindung der ausgehärteten Masse mit der Bohrlochwandung und somit eine bessere Verankerung gewährleisten.

Vorteilhaft wird die definierte Menge des Füllstoffs dem Anwender in entsprechende Verpackungseinheiten zur Verfügung gestellt. Der Füllstoff ist beispielsweise in einem Säckchen, einem Folienbeutel oder einem anderen, von dem Befestigungselement leicht zerstörbaren Behältnis verpackt.

Vorzugsweise entspricht die definierte Menge des Füllstoffs 10 Vol.-% bis 30 Vol.-% des Volumens der in das Bohrloch eingebrachten aushärtbaren, mehrkomponentigen Masse, womit ein vorteilhaftes Mischen der im Bohrloch befindlichen aushärtbaren, mehrkomponentigen Masse und gegebenenfalls Profilierung des Bohrlochs beim Eindrehen des Befestigungselementes gewährleistet ist.

Bevorzugt entspricht die Partikelgrösse des Füllstoffs dem 0.05- bis 0.35-fachen des Aussendurchmessers des Befestigungselementes, wobei die Partikelgrösse vorteilhaft im Wesentlichen der Grösse des Ringspaltes zwischen der Bohrlochwandung und dem Befestigungselement entspricht.

Vorzugsweise wird als Füllstoff Korund verwendet, welcher eine ausreichende Härte, insbesondere zur Profilierung der Bohrlochwandung aufweist. Alternativ werden beispielsweise Quarzsand oder andere, vorteilhaft mineralische, Zuschlagstoffe als Füllstoffe verwendet, die eine ausreichend hohe Härte zur Profilierung der Bohrlochwandung aufweisen.

Bevorzugt wird ein mit einem Rechtsgewinde versehenes Befestigungselement verwendet, das linksdrehend in das Bohrloch eingedreht wird. Durch das Rechtsgewinde wird beim linksdrehenden Eindrehen des Befestigungselementes die aushärtbare Masse in das Bohrloch gefördert und dadurch eine gewisse Verpressung der aushärtbaren Masse sowie des am Bohrlochgrund befindlichen Bohrmehls beziehungsweise Bohrkleins im Bohrloch erreicht.

Die Erfindung wird nachstehend anhand von Ausführungsbeispielen näher erläutert. Es zeigen:
- Fig. 1-3: Ein erstes Ausführungsbeispiel eines Setzverfahrens in drei Einzelschritten; und
- Fig. 4-5: ein zweites Ausführungsbeispiel eines Setzverfahrens in zwei Einzelschritten

Grundsätzlich sind in den Figuren gleiche Teile mit den gleichen Bezugszeichen versehen.

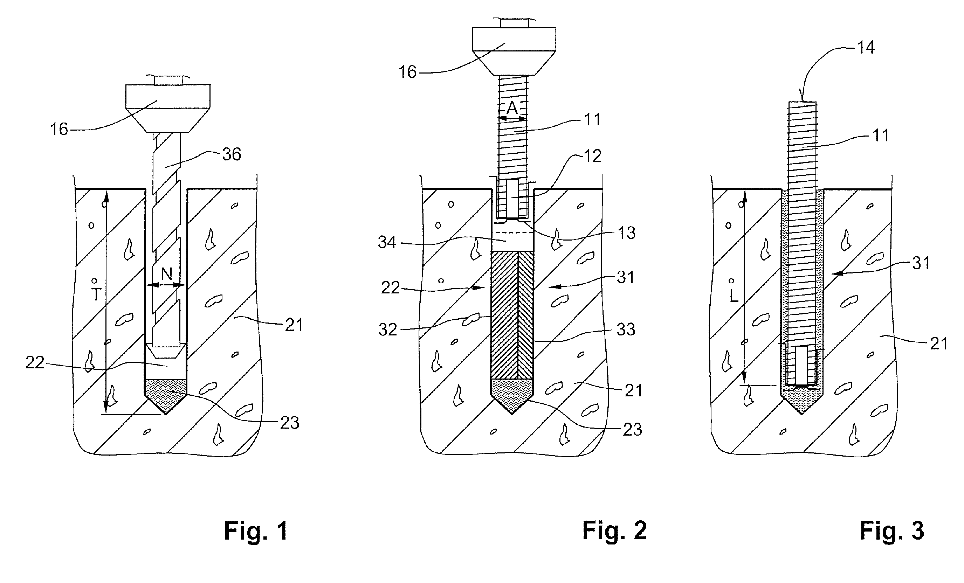

Bei dem in den Figuren 1 bis 3 dargestellten Setzverfahren zum Verankern eines Befestigungselementes 11, hier beispielhaft eine M12-Gewindestange mit einer Profilierung in Form eines Rechtsgewindes, in einem Untergrund 21, wie z. B. eine Betondecke, mittels einer aushärtbaren, mehrkomponentigen Masse 31 wird in einem ersten Schritt mit einem Bohrer 36, z. B. mit einem Hammerbohrer, ein Bohrloch 22 in den Untergrund 21 erstellt. Die erstellte Bohrlochtiefe T ist 10% grösser als die erforderliche Verankerungslänge L des Befestigungselementes 11. Die erforderliche Verankerungslänge L einer M12-Gewindestange in einem Betonuntergrund ist beispielsweise 100 mm, womit die Bohrlochtiefe T entsprechend mit 110 mm gewählt ist. Der Bohrer 36 weist einen Nenndurchmesser N auf, der dem 1.2-fachen des Aussendurchmessers A des Befestigungselementes 11 entspricht. Auf das Beispiel mit einer M12-Gewindestange bezogen wird somit ein Bohrer 36 mit einem Nenndurchmesser von 14 mm gewählt. Das beim Bohren anfallende Bohrmehl beziehungsweise Bohrklein 23 verbleibt im Bohrloch 22.

Ohne zuvor das Bohrloch 22 zu reinigen, wird anschliessend mit einem hier nicht dargestellten Auspressgerät die, vorteilhaft pastöse, aushärtbare, mehrkomponentige Masse 31 in das Bohrloch 22 eingebracht, in dem sich somit noch zumindest am Bohrlochgrund Bohrmehl beziehungsweise Bohrklein 23 befindet. Die beiden Komponenten, das Harz 32 und der Härter 33, der aushärtbaren, mehrkomponentigen Masse 31 werden unvermischt in das Bohrloch 22 eingebracht. Optional kann zusätzlich eine definierte Menge eines Füllstoffs 34 in das Bohrloch 22 eingebracht werden.

An einem Ende des Befestigungselementes 11 wird beispielsweise ein Profilierungs/Mischelement 12 vorgesehen, welches einen Mischabschnitt 13 aufweist. Dann wird das Befestigungselement 11 mit dem Mischabschnitt 13 voran in das Bohrloch 22 eingeführt und maschinell, vorteilhaft linksdrehend, in das befüllte Bohrloch 22 mit einem Bohrhammer als Drehantriebseinrichtung bis zum Erreichen der erforderlichen Verankerungslänge L des Befestigungselementes 11 eingedreht. Von der Drehantriebseinrichtung ist in Fig. 1 einzig die Werkzeugaufnahme 16 dargestellt. Beim Eindrehen des Befestigungselementes 11 werden das Harz 32, der Härter 33 sowie ein Teil des im Bohrloch befindlichen Bohrmehls beziehungsweise Bohrkleins 23 miteinander vermischt. Gleichzeitig wird die Wandung des Bohrlochs 22 von den Profilierungsabschnitten des Profilierungs-/Mischelementes 12 zur Erzeugung von Hinterschnitten profiliert.

Nach dem Aushärten der aushärtbaren Masse 31 kann am freien Ende 14 des Befestigungselementes 11 ein hier nicht dargestelltes Anbauteil am Untergrund 21 befestigt werden.

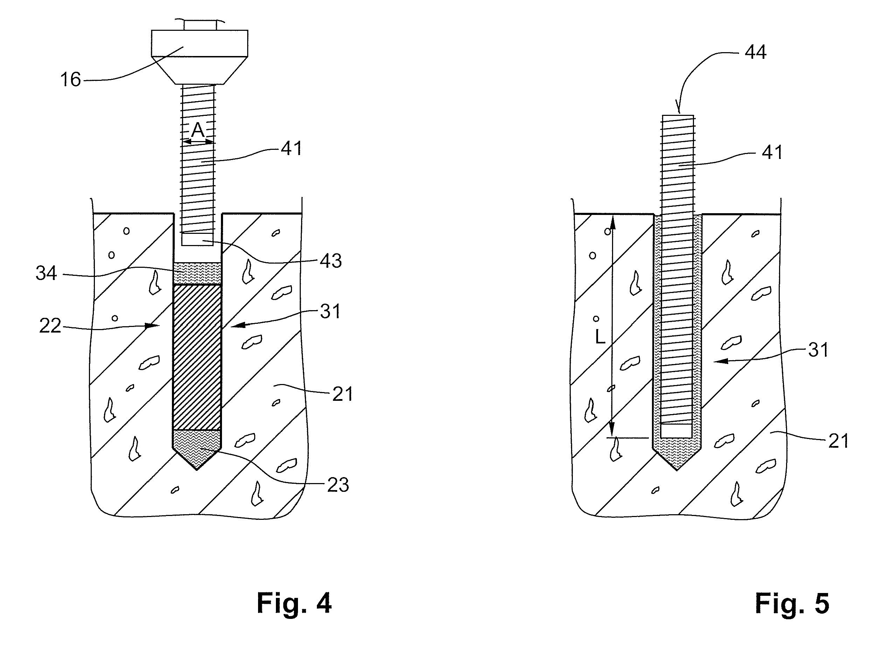

Bei dem in den Figuren 4 und 5 dargestellten Setzverfahren zum Verankern eines Befestigungselementes 41, hier als Beispiel eine M10-Gewindestange, in einem Untergrund 21, wie z. B. eine Wand, mittels einer aushärtbaren, mehrkomponentigen Masse 31 wird, im Unterschied zu dem zuvor beschriebenen Setzverfahren, nach dem Bohren des Bohrlochs 22 die aushärtbare, mehrkomponentige Masse 31 vorgemischt mit einem hier nicht dargestellten Auspressgerät in das Bohrloch 22 eingebracht, ohne zuvor das Bohrloch 22 zu reinigen. Anschliessend wird eine definierte Menge eines Füllstoffs 34 mit einer definierten Partikelgrössenverteilung vor dem maschinellen Eindrehen des Befestigungselementes 41 in das Bohrloch 22 eingebracht. Der Füllstoff 34, vorteilhaft Korund, weist eine ausreichende Härte zur Profilierung der Wandung des Bohrlochs 22 auf und wird beispielsweise in einem Säckchen dem Anwender zur Verfügung gestellt. Die definierte Menge des Füllstoffs 34 entspricht 10 Vol.-% bis 30 Vol.-% des Volumens der in das Bohrloch 22 eingebrachten aushärtbaren, mehrkomponentigen Masse 31. Die Partikelgrösse des Füllstoffs 34 beträgt in diesem Ausführungsbeispiel 1 mm bis 2 mm, was somit bei einer M10-Gewindestange als Befestigungselement 41 dem 0.1- bis 0.2-fachen des Aussendurchmessers A des Befestigungselementes 41 entspricht.

An dem frontseitigen Ende des Befestigungselementes 41 ist eine Mischschneide als Mischabschnitt 43 vorgesehen. Nach dem Einführen des Befestigungselementes 41 mit dem Mischabschnitt 43 voran in das Bohrloch 22 wird das Befestigungselement 41 maschinell in das befüllte Bohrloch 22 z. B. mit einem Schrauber als Drehantriebseinrichtung bis zum Erreichen der erforderlichen Verankerungslänge L des Befestigungselementes 41 eingedreht. Auch in Figur 2 ist von der Drehantriebseinrichtung einzig die Werkzeugaufnahme 16 dargestellt. Dabei werden die aushärtbare Masse 31, der Füllstoff 34 sowie ein Teil des im Bohrloch befindlichen Bohrmehls beziehungsweise Bohrkleins 23 miteinander vermischt. Gleichzeitig wird die Wandung des Bohrlochs 22 durch den harten, groben Füllstoff 34 zur Erzeugung von Hinterschnitten profiliert. Nach dem Aushärten der aushärtbaren Masse 31 kann am freien Ende 44 des Befestigungselementes 41 ein hier nicht dargestelltes Anbauteil am Untergrund 21 befestigt werden.

## Patentansprüche

1. Setzverfahren zum Verankern eines Befestigungselementes (11; 41) mit einem Aussendurchmesser (A) und mit einem Mischabschnitt (13; 43) in einem Untergrund (21) mittels einer aushärtbaren, mehrkomponentigen Masse (31) umfassend die Schritte:
- Bohren eines Bohrlochs (22) in den Untergrund (21) mit einem Bohrer (36), wobei die erstellte Bohrlochtiefe (T) zumindest 5% grösser als die erforderliche Verankerungslänge (L) des Befestigungselementes (11; 41) ist;
- Einbringen der aushärtbaren, mehrkomponentigen Masse (31) in das ungereinigte Bohrloch (22) mit einem Auspressgerät;
- Einführen des Befestigungselementes (11; 41) mit dem Mischabschnitt (13; 43) voran in das Bohrloch (22); und
- maschinelles Eindrehen des Befestigungselementes (11; 41) in das befüllte Bohrloch (22) mit einer Drehantriebseinrichtung unter Vermischung der aushärtbaren, mehrkomponentigen Masse (31) und des im Bohrloch befindlichen Bohrmehls (23) bis zum Erreichen der erforderlichen Verankerungslänge (L) des Befestigungselementes (11; 41).

2. Setzverfahren nach Anspruch 1, **dadurch gekennzeichnet, dass** ein Bohrer (36) verwendet wird, dessen Nenndurchmesser (N) dem 1.05- bis 1.5-fachen des Aussendurchmessers (A) des Befestigungselementes (11; 41) entspricht.

3. Setzverfahren nach Anspruch 1 oder 2, **dadurch gekennzeichnet, dass** die erstellte Bohrlochtiefe (T) maximal 15 % grösser als die erforderliche Verankerungslänge (L) des Befestigungselementes (11; 41) ist.

4. Setzverfahren nach einem der Ansprüche 1 bis 3, **dadurch gekennzeichnet, dass** die Komponenten (32, 33) der aushärtbaren, mehrkomponentigen Masse (31) unvermischt in das Bohrloch (22) eingebracht werden.

5. Setzverfahren nach einem der Ansprüche 1 bis 4, **dadurch gekennzeichnet, dass** eine definierte Menge eines Füllstoffs (34) mit einer definierten Partikelgrössenverteilung nach dem Einbringen der aushärtbaren, mehrkomponentigen Masse (31) und vor dem maschinellen Eindrehen des Befestigungselementes (11; 41) in das Bohrloch (22) eingebracht wird.

6. Setzverfahren nach Anspruch 5, **dadurch gekennzeichnet, dass** die definierte Menge des Füllstoffs (34) 10 Vol.-% bis 30 Vol.-% des Volumens der in das Bohrloch (22) eingebrachten aushärtbaren, mehrkomponentigen Masse (31) entspricht.

7. Setzverfahren nach Anspruch 5 oder 6, **dadurch gekennzeichnet, dass** die Partikelgrösse des Füllstoffs (34) dem 0.05- bis 0.5-fachen des Aussendurchmessers (A) des Befestigungselementes (11; 41) entspricht.

8. Setzverfahren nach einem der Ansprüche 5 bis 7, **dadurch gekennzeichnet, dass** als Füllstoff (34) Korund verwendet wird.

9. Setzverfahren nach einem der Ansprüche 1 bis 8, **dadurch gekennzeichnet, dass** ein mit einem Rechtsgewinde versehenes Befestigungselement (11; 41) verwendet wird, das linksdrehend in das Bohrloch (22) eingedreht wird.
